# EUROPEAN PATENT APPLICATION

(11) **EP 4 187 431 A1**
(43) Date of publication of application: **31.05.2023**
(21) Application number: 22209295.9
(22) Date of filing: 24.11.2022
(51) Int. Cl.: G06F 40/284

(54) **ADDRESS IDENTIFICATION METHOD AND APPARATUS, ELECTRONIC DEVICE, AND STORAGE MEDIUM**

(30) Priority: 24.11.2021 CN 202111401855
(71) Applicant: Beijing Baidu Netcom Science Technology Co., Ltd., Beijing 100085 (CN)
(72) Inventor: Xu, Siqi, Beijing, 100085 (CN); Pan, Xu, Beijing, 100085 (CN); Liu, Chenhui, Beijing, 100085 (CN); Gong, Jian, Beijing, 100085 (CN); Zhuo, Zecheng, Beijing, 100085 (CN)
(74) Representative: Hoffmann Eitle

(57) **Abstract**

A method and an apparatus of recognizing an address, an electronic device, a storage medium, and a program product, which relate to fields of artificial intelligence and computer technologies, in particular to fields of knowledge graph, deep learning and cloud computing. The method includes: performing a location entity recognition on a content to be recognized for describing an event, so as to obtain a target location entity, the target location entity including at least one of a standardized location entity, an alias location entity, or a landmark location entity; determining, for each type of location entity in the target location entity, a standardized address corresponding to the location entity according to an address graph to obtain at least one standardized address, the address graph including a standardized location entity, an alias location entity, a landmark location entity, and a corresponding relationship between location entities; and determining, from the at least one standardized address, a first target standardized address corresponding to the content to be recognized, the first target standardized address representing a place where the event occurs.

## Description

### TECHNICAL FIELD

The present disclosure relates to fields of artificial intelligence and computer technologies, in particular to fields of knowledge graph, deep learning and cloud computing. Specifically, the present disclosure relates to a method and an apparatus of recognizing an address, an electronic device, a storage medium, and a program product.

### BACKGROUND

With a rapid development of an information age, a lot of text information and audio information are produced and become a main form of information dissemination. A public opinion analysis may be performed based on information. As information in structured information, an administrative region may intuitively present a place where the information occurs, and support a function of retrieving the information based on the administrative region.

### SUMMARY

The present disclosure provides a method and an apparatus of recognizing an address, an electronic device, a storage medium, and a program product.

According to an aspect of the present disclosure, a method of recognizing an address is provided, including: performing a location entity recognition on a content to be recognized for describing an event, so as to obtain a target location entity, wherein the target location entity includes at least one selected from: a standardized location entity, an alias location entity, or a landmark location entity; determining, for each type of location entity in the target location entity, a standardized address corresponding to the location entity according to an address graph, so as to obtain at least one standardized address, wherein the address graph includes a standardized location entity, an alias location entity, a landmark location entity, and a corresponding relationship between location entities; and determining, from the at least one standardized address, a first target standardized address corresponding to the content to be recognized, wherein the first target standardized address represents a place where the event occurs.

According to another aspect of the present disclosure, an apparatus of recognizing an address is provided, including: a recognition module configured to perform a location entity recognition on a content to be recognized for describing an event, so as to obtain a target location entity, wherein the target location entity includes at least one selected from: a standardized location entity, an alias location entity, or a landmark location entity; a first determination module configured to determine, for each type of location entity in the target location entity, a standardized address corresponding to the location entity according to an address graph, so as to obtain at least one standardized address, wherein the address graph includes a standardized location entity, an alias location entity, a landmark location entity, and a corresponding relationship between location entities; and a second determination module configured to determine, from the at least one standardized address, a first target standardized address corresponding to the content to be recognized, wherein the first target standardized address is configured to represent a place where the event occurs.

According to another aspect of the present disclosure, an electronic device is provided, including: at least one processor; and a memory communicatively connected to the at least one processor, wherein the memory stores instructions executable by the at least one processor, and the instructions, when executed by the at least one processor, cause the at least one processor to implement the method of recognizing the address described above.

According to another aspect of the present disclosure, a non-transitory computer-readable storage medium having computer instructions therein is provided, and the computer instructions are configured to cause a computer system to implement the method of recognizing the address described above.

According to another aspect of the present disclosure, a computer program product containing a computer program is provided, and the computer program, when executed by a processor, causes the processor to implement the method of recognizing the address described above.

It should be understood that content described in this section is not intended to recognize key or important features in embodiments of the present disclosure, nor is it intended to limit the scope of the present disclosure. Other features of the present disclosure will be easily understood through the following description.

### BRIEF DESCRIPTION OF THE DRAWINGS

The accompanying drawings are used for better understanding of the solution and do not constitute a limitation to the present disclosure, in which:
FIG. 1 schematically shows an exemplary system architecture to which a method and an apparatus of recognizing an address may be applied according to embodiments of the present disclosure;
FIG. 2 schematically shows a flowchart of a method of recognizing an address according to embodiments of the present disclosure;
FIG. 3 schematically shows a schematic diagram of an address graph according to embodiments of the present disclosure;
FIG. 4 schematically shows a schematic diagram of recognizing an address for an event described by a query or keyword according to embodiments of the present disclosure;
FIG. 5 schematically shows a block diagram of an apparatus of recognizing an address according to embodiments of the present disclosure; and
FIG. 6 shows a schematic block diagram of an example electronic device for implementing embodiments of the present disclosure.

### DETAILED DESCRIPTION OF EMBODIMENTS

Exemplary embodiments of the present disclosure will be described below with reference to accompanying drawings, which include various details of embodiments of the present disclosure to facilitate understanding and should be considered as merely exemplary. Therefore, those of ordinary skilled in the art should realize that various changes and modifications may be made to embodiments described herein without departing from the scope and spirit of the present disclosure. Likewise, for clarity and conciseness, descriptions of well-known functions and structures are omitted in the following descriptions.

In the technical solution of the present disclosure, the collection, storage, use, processing, transmission, provision, disclosure and application of address information involved are all in compliance with the provisions of relevant laws and regulations, and necessary confidentiality measures have been taken, and it does not violate public order and good morals. In the technical solution of the present disclosure, before obtaining or collecting the user's personal information, the user's authorization or consent is obtained.

An administrative region may refer to a three-level administrative region, which may contain a first-level provincial-level administrative region, a second-level prefecture-level administrative region, a third-level county-level administrative region, or the like. The first-level provincial-level administrative region may include a province, an autonomous region, a municipality directly under the Central Government, and a special administrative region. The second-level prefecture-level administrative region may include a prefecture-level city, a region, an autonomous prefecture, a league, or the like. The third-level county-level administrative region may include a municipal district, a county-level city, a county, an autonomous county, a banner, an autonomous banner, a special district, a forestry district, or the like. A complete three-level administrative region may include, for example, XX Province-XX City-XX District, XX City-XX City-XX District, or other forms.

Generally, a disseminated information does not contain an address of a complete three-level administrative region. For example, an information content may only contain a provincial-level address, a prefecture-level address, or a county-level address, which is incomplete. For example, a district-level address contained in the information content may correspond to a plurality of regions, that is, an address ambiguity exists. For example, the information content does not contain a specific administrative region name, but contains a landmark location (symbolic place) or organization name. In addition, one event may be represented by at least one information, and thus may correspond to at least one information content, and each information content may contain a plurality of addresses. However, for one event, there is often only one place where the event occurs. Therefore, it is necessary to recognize an address of the event from the address of the information content. For example, by inputting a query or a keyword, it is possible to retrieve at least one news related to an event represented by the query or keyword, and thus an address of the place where the event occurs may be obtained based on the news.

A task of recognizing an address of an administrative region for a single news or recognizing an address of an administrative region for a plurality of event news retrieved through a query or keyword may include: an address recognition; an address normalization that may include an address standardization and an address disambiguation; an event address recognition based on a plurality of addresses, and/or other steps.

When performing the above-mentioned step of address normalization, it is necessary to determine whether it is matched with a certain level in a standard address by means of string matching based on an offline administrative region address dictionary, and then complete the standard address. The administrative region address dictionary stores standard administrative region addresses, with one address per line. If only string matching is used, there may be an omission. A limitation of this method is that the administrative region address dictionary may not cover various alias representations, and the address recognition may not be performed on a landmark organization and location. In addition, when it is needed to perform an event address recognition for a plurality of event news retrieved based on a query or keyword, there is a lack of mature solutions.

The present disclosure provides a method and an apparatus of recognizing an address, an electronic device, and a storage medium. The method includes: performing a location entity recognition on a content to be recognized for describing an event, so as to obtain a target location entity, where the target location entity includes at least one selected from: a standardized location entity, an alias location entity, or a landmark location entity; for each type of location entity in the target location entity, determining a standardized address corresponding to the location entity according to an address graph, so as to obtain at least one standardized address, where the address graph includes a standardized location entity, an alias location entity, a landmark location entity, and a corresponding relationship between location entities; and determining, from the at least one standardized address, a first target standardized address corresponding to the content to be recognized, where the first target standardized address is used to represent a place where the event occurs.

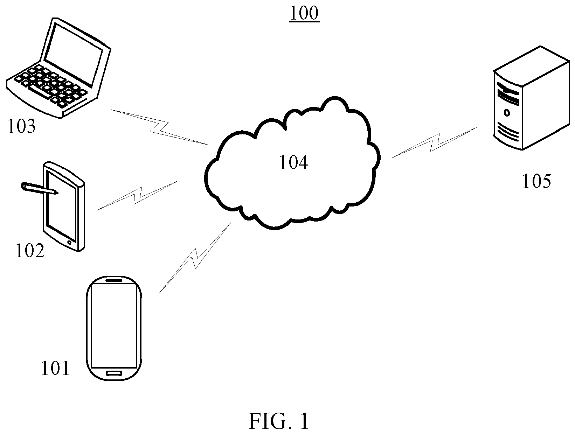

FIG. 1 schematically shows an exemplary system architecture to which a method and an apparatus of recognizing an address may be applied according to embodiments of the present disclosure.

It should be noted that FIG. 1 is merely an example of a system architecture to which embodiments of the present disclosure may be applied, so as to help those skilled in the art to understand the technical content of the present disclosure. It does not mean that embodiments of the present disclosure may not be applied to other devices, systems, environments or scenarios. For example, in other embodiments, the exemplary system architecture to which the method and the apparatus of recognizing the address may be applied may include a terminal device, and the terminal device may be used to implement the method and the apparatus of recognizing the address provided by embodiments of the present disclosure without interacting with a server.

As shown in FIG. 1, a system architecture 100 according to such embodiments may include terminal devices 101, 102, 103, a network 104, and a server 105. The network 104 is a medium for providing a communication link between the terminal devices 101, 102, 103 and the server 105. The network 104 may include various connection types, such as wired or wireless communication links, or the like.

The terminal devices 101, 102, 103 may be used by a user to interact with the server 105 via the network 104 so as to receive or send messages, etc. The terminal devices 101, 102 and 103 may be installed with various communication client applications, such as knowledge reading applications, web browser applications, search applications, instant messaging tools, mailbox clients and/or social platform software, etc. (for example only).

The terminal devices 101, 102 and 103 may be various electronic devices having display screens and supporting web browsing, including but not limited to smartphones, tablet computers, laptop computers, desktop computers, or the like.

The server 105 may be a server that provides various services, such as a background management server (for example only) that provides a support for a content browsed by the user using the terminal devices 101, 102 and 103. The background management server may analyze and process a received user request and other data, and feed back a processing result (such as a web page, an information, or data acquired or generated according to the user request) to the terminal devices. The server may be a cloud server, also known as a cloud computing server or a cloud host, which is a host product in a cloud computing service system to solve shortcomings of difficult management and weak business scalability existing in an existing physical host and VPS (Virtual Private Server) service. The server may also be a server of a distributed system or a server combined with a block-chain.

It should be noted that the method of recognizing the address provided by embodiments of the present disclosure may generally be performed by the terminal device 101, 102 or 103. Accordingly, the apparatus of recognizing the address provided by embodiments of the present disclosure may also be provided in the terminal device 101, 102 or 103.

Alternatively, the method of recognizing the address provided by embodiments of the present disclosure may also be generally performed by the server 105. Accordingly, the apparatus of recognizing the address provided by embodiments of the present disclosure may also be generally provided in the server 105. The method of recognizing the address provided by embodiments of the present disclosure may also be performed by a server or server cluster different from the server 105 and capable of communicating with the terminal devices 101, 102, 103 and/or the server 105. Accordingly, the apparatus of recognizing the address provided by embodiments of the present disclosure may also be provided in a server or server cluster different from the server 105 and capable of communicating with the terminal devices 101, 102, 103 and/or the server 105.

For example, when it is necessary to perform an address recognition on a content to be recognized for describing an event, the terminal devices 101, 102 and 103 may acquire the content to be recognized for describing the event, and then send the acquired content to be recognized to the server 105. The server 105 may perform a location entity recognition on the content to be recognized for describing the event, so as to obtain a target location entity. The target location entity includes at least one selected from: a standardized location entity, an alias location entity, or a landmark location entity. For each type of location entity in the target location entity, a standardized address corresponding to the location entity may be determined according to an address graph, so as to obtain at least one standardized address. The address graph includes a standardized location entity, an alias location entity, a landmark location entity, and a corresponding relationship between location entities. A first target standardized address corresponding to the content to be recognized may be determined from the at least one standardized address, and the first target standardized address is used to represent a place where the event occurs. Alternatively, an analysis of the content to be recognized and a determination of the first target standardized address corresponding to the content to be recognized may be performed by a server or server cluster capable of communicating with the terminal devices 101, 102, 103 and/or the server 105.

It should be understood that the number of terminal devices, network and server shown in FIG. 1 is merely schematic. According to implementation needs, any number of terminal device, network and server may be provided.

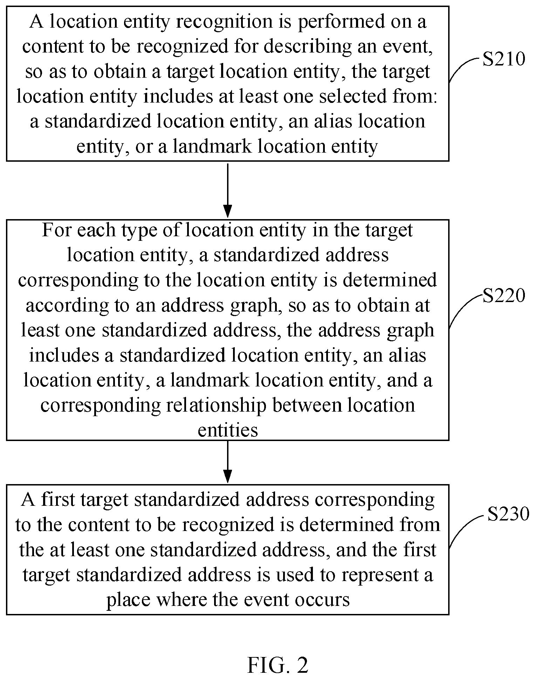

FIG. 2 schematically shows a flowchart of a method of recognizing an address according to embodiments of the present disclosure.

As shown in FIG. 2, the method includes operation S210 to operation S230.

In operation S210, a location entity recognition is performed on a content to be recognized for describing an event, so as to obtain a target location entity. The target location entity includes at least one selected from: a standardized location entity, an alias location entity, or a landmark location entity.

In operation S220, for each type of location entity in the target location entity, a standardized address corresponding to the location entity is determined according to an address graph, so as to obtain at least one standardized address. The address graph includes a standardized location entity, an alias location entity, a landmark location entity, and a corresponding relationship between location entities.

In operation S230, a first target standardized address corresponding to the content to be recognized is determined from the at least one standardized address, and the first target standardized address is used to represent a place where the event occurs.

According to embodiments of the present disclosure, the content to be recognized may include at least one selected from: a text content such as news, or an audio content such as a voice broadcast. The standardized location entity may include at least one selected from: a provincial-level administrative region name, a prefecture-level administrative region name, a county-level administrative region name, or the like, such as HB Province, BJ City, SZ City, CY District, and so on. The alias location entity may include at least one selected from: an alias corresponding to a provincial-level administrative region name, an alias corresponding to a prefecture-level administrative region name, an alias corresponding to a county-level administrative region name, or the like, such as HB, BJ, SZ, CY, and so on. The landmark location entity may include at least one selected from: a scenic spot name, a park name, an organization name, or other POI (Point of Interest) names, such as at least one selected from BJHQYC, SJZC, and so on. BJHQYC is a scenic spot in BJ City. SJZC may be a scenic spot in SZ City, a scenic spot in CS City, or the like.

According to embodiments of the present disclosure, a structure of the address graph may include location entities, attributes of location entities, and a corresponding relationship between location entities. The location entity may include at least one selected from: a standardized location entity determined according to each level of standardized location name, a standardized location entity determined according to a combined location name constructed by multiple levels of standardized location names, an alias location entity, or a landmark location entity. Each location entity may correspond to an attribute. A type may be an essential attribute of the location entity, which may include but not be limited to those shown in Table 1. The corresponding relationship between location entities may include but not be limited to those shown in Table 2. The standardized address may be an address with a structure of province-prefecture/city-district/county.

**Table 1**

| Location Entity | Type |
|---|---|
| GD Province-SZ City-NS District | Standard province-prefecture-county/ standard province-city-county |
| GD Province-SZ City | Standard province-prefecture/ standard province-city |
| GD Province | Standard province |
| SZ City | Standard prefecture/standard city |
| NS District | Standard county/standard district |
| NS | County/ district |
| SJZC | Landmark location name |
| SZSJZC | Landmark location name |
| GDSJZC | Landmark location name |

**Table 2**

| Relationship | Abbreviation | Location Entity 1 | Location Entity 2 |
|---|---|---|---|
| Administrative region address Inclusion | LC | GD Province-SZ City-NS District | NS District |
| Standardized address | NL | NS District | GD Province-SZ City-NS District |
| Location Inclusion | PC | GD Province-SZ City-NS District | SJZC |
| Ownership | MO | SJZC | GD Province |
| Superior-level | H-1 | SZ City | GD Province |
| -distance (distance is a level difference) | H-2 | NS District | GD Province |
| Subordinate-level -distance (distance is a level difference) | L-1 | GD Province | SZ City |
| | L-2 | GD Province | NS District |
| Alias | AS | NS District | NS |

According to embodiments of the present disclosure, a data source of the standardized location entity may be obtained according to an administrative region address dictionary. Each line in the administrative region address dictionary may contain a standard province-prefecture-county address. It is possible to supplement the administrative region address inclusion, standardized address, superior-level and subordinate-level relationships and the like to the address graph according to the administrative region address dictionary. A data source of the alias location entity may be obtained according to an alias dictionary. Each line in the alias dictionary may contain a group of aliases corresponding to one standard name. Different aliases may be separated by a comma, such as "NS, NS District", and so on. The aliases in each group of aliases may also form an alias relationship with each other. It is possible to supplement the alias relationship to the address graph according to the alias dictionary. A data source of the landmark location entity may be obtained according to entry data containing a geographic location in an Internet entry. It is possible to supplement the landmark location entity, the alias of the landmark location entity, the ownership relationship of the landmark location entity, the standardized address relationship of the landmark location entity, and so on to the address graph according to the landmark location and the geographic location-related data in the Internet entry corresponding to the landmark location.

For example, the landmark location may include SZSJZC, and a process of processing data based on the Internet entry may include: acquiring geographic location-related data in an Internet entry corresponding to SZSJZC. For example, "No. XXXX, SNDD, NS District, SZ City, GD Province" may be obtained. An open-source toolkit LAC may be used to recognize an address entity of the "No. XXXX, SNDD, NS District, SZ City, GD Province", so as to obtain an entity type of each token. A recognition result may include, for example, a token result ['GD Province', 'SZ City', 'NS District', 'SNDD', 'No. XXXX'] and a corresponding entity type ['LOC', 'LOC', 'LOC', 'm ']. LOC may represent an address. An element of the LOC type may be extracted, and it may be determined whether the element belongs to a location entity in the address graph. If so, an ownership relationship may be created. For example, the location entity "SZSJZC" has an ownership relationship and a location inclusion relationship with the "GD Province", the "SZ City", and the "NS District". If the Internet entry further contains an alias corresponding to SZSJZC, an alias location entity may be determined according to the Internet entry, an information of the alias location entity may be added to the address graph, and an alias relationship between SZSJZC and the alias location entity may be added.

According to embodiments of the present disclosure, the address graph may be a graph constructed according to the above-mentioned standardized location entity, alias location entity and landmark location entity and their corresponding relationships.

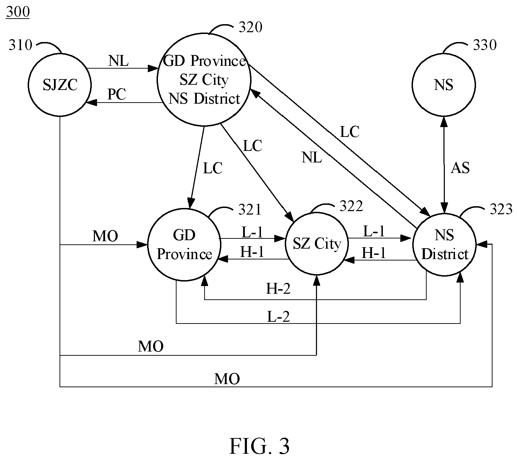

FIG. 3 schematically shows a schematic diagram of an address graph according to embodiments of the present disclosure.

As shown in FIG. 3, according to the location entities and their corresponding relationships shown in Table 1 and Table 2, an address graph 300 for describing related location entities may be constructed. The address graph 300 may include, for example, standardized address entities such as GD Province-SZ City-NS District 320, GD Province 321, SZ City 322, NS District 323, etc., an alias location entity NS 330, a landmark location entity SJZC310, and so on. A linear connection in the address graph 300 may represent a corresponding relationship between location entities, which may include, for example, an administrative region address inclusion LC, a standardized address NL, a location inclusion PC, an ownership MO, a superior-level-distance H-{dis}, a subordinate-level-distance L-{dis}, an alias AS, or the like. For example, a corresponding relationship MO between SJZC 310 and SZ 322 may represent that SJZC 310 belongs to SZ City 322. A corresponding relationship L-2 between GD Province 321 and NS District 323 may represent that NS District 323 is an administrative region location two levels lower than GD Province.

It should be noted that a process of constructing the address graph according to the structure of the above-mentioned address graph and the obtained data sources may be implemented by manual import, or by an automatic construction by designing related programs, which is not limited here.

According to embodiments of the present disclosure, the content to be recognized for describing the event may include, for example, a news article, and the news article may contain, for example, a plurality of location entities. For example, target location entities such as SZ, BY, etc. may be obtained by performing a location entity recognition on the news article. For example, by analyzing and processing each of the target location entities according to the address graph, standardized addresses such as GD Province-SZ City-NS District and GD Province-GZ City-BY District, etc. may be obtained. On this basis, a determined first target standardized address for representing a place where the event occurs may include both GD Province-SZ City-NS District and GD Province-GZ City-BY District, or include any one of GD Province-SZ City-NS District and GD Province-GZ City-BY District.

Through embodiments of the present disclosure described above, the address graph constructed according to the standardized location entity, the alias location entity, the landmark location entity and their corresponding relationships may contain more information of location entity than the administrative region address dictionary and the alias dictionary, and may be more intuitive. It is possible to perform an address recognition on a content to be recognized containing various types of location entities including the standardized location entity, the alias location entity and the landmark location entity, etc. It is also possible to effectively alleviate a problem that: when the address recognition is performed based on the administrative region address dictionary, an address represented by various aliases and landmark locations cannot be recognized and a standardized address cannot be determined for such address.

The method shown in FIG. 2 will be further described below in combination with specific embodiments.

According to embodiments of the present disclosure, in a case that the target location entity includes the standardized location entity, the determining the standardized address corresponding to the location entity according to the address graph may include: determining a first standardized address corresponding to the standardized location entity according to the address graph; and determining the first standardized address as the standardized address corresponding to the standardized location entity.

According to embodiments of the present disclosure, for an element of the LOC type in each location recognition result, it may be retrieved from the address graph. As shown in FIG. 3, in a case that the standardized location entity is SZ City, it may be determined, according to the address graph 300, that the first standardized address corresponding to SZ City 322 is GD Province-SZ City-NS District 320, that is, it may be determined that the standardized address corresponding to SZ City is GD Province-SZ City-NS District.

Through embodiments of the present disclosure described above, as an expression of the address graph is more intuitive, a recognition efficiency may be effectively improved by recognizing a standardized address based on the address graph.

According to embodiments of the present disclosure, in a case that the target location entity includes the alias location entity, the determining the standardized address corresponding to the location entity according to the address graph may include: determining a first target standardized location entity corresponding to the alias location entity according to the address graph; determining a second standardized address corresponding to the first target standardized location entity according to the address graph; and determining the second standardized address as the standardized address corresponding to the alias location entity.

According to embodiments of the present disclosure, as shown in FIG. 3, in a case that the alias location entity is NS, it may be determined, according to the address graph 300, that the first target standardized location entity corresponding to NS 330 is NS District 323. Then, it may be determined, according to the address graph 300, that the second standardized address corresponding to NS District 323 is GD Province-SZ City-NS District 320. Thus, it may be determined that the standardized address corresponding to NS is GD Province-SZ City-NS District.

Through embodiments of the present disclosure described above, as the expression of the address graph is more intuitive, the recognition efficiency may be effectively improved by recognizing the standardized address based on the address graph. In addition, by recognizing the standardized address based on the address graph containing the alias location entity, it is possible to effectively alleviate a problem that: when the address recognition is performed based on the administrative region address dictionary, an address represented by various aliases cannot be recognized and a standardized address cannot be determined for such address.

According to embodiments of the present disclosure, in a case that the target location entity includes the landmark location entity, the determining the standardized address corresponding to the location entity according to the address graph may include: determining a target landmark location entity in the address graph, where a similarity between the target landmark location entity and the landmark location entity is greater than a first predetermined threshold; determining, according to the address graph, a second target standardized location entity corresponding to the target landmark location entity; determining, according to the address graph, a third standardized address corresponding to the second target standardized location entity; and determining the third standardized address as the standardized address corresponding to the landmark location entity.

According to embodiments of the present disclosure, a fuzzy matching strategy may be adopted in a case of retrieving the landmark location entity from the address graph. For example, if a percentage of a length of a longest common sub-sequence between a recognized landmark location name and a landmark location entity in the address graph to a length of the landmark location name is greater than a predetermined threshold, such as 60%, or if a similarity between the recognized landmark location name and a landmark location entity in the address graph is greater than a predetermined threshold, such as 90%, then it may be determined that the landmark location name is matched with the landmark location entity. The predetermined threshold may be customized.

According to embodiments of the present disclosure, as shown in FIG. 3, in a case that the landmark location entity is SJZC, it may be determined that the target landmark location entity in the address graph 300 whose similarity to SJZC is greater than the first predetermined threshold is SJZC 310. Then, it may be determined, according to the address graph 300, that the second target standardization location entity corresponding to SJZC 310 includes at least one selected from: GD Province-SZ City-NS District 320, GD Province 321, SZ City 322, NS District 323, etc. Then, it may be determined, according to the address graph 300, that the third standardized address corresponding to the at least one of GD Province-SZ City-NS District 320, GD Province 321, SZ City 322, NS District 323, etc. is GD Province-SZ City-NS District 320. Thus, it may be determined that the standardized address corresponding to SJZC is GD Province-SZ City-NS District.

Through embodiments of the present disclosure described above, as the expression of the address graph is more intuitive, the recognition efficiency may be effectively improved by recognizing the standardized address based on the address graph. In addition, by recognizing the standardized address based on the address graph containing the landmark location entity, it is possible to effectively alleviate a problem that: when the address recognition is performed based on the administrative region address dictionary, various landmark location names cannot be recognized and a standardized address cannot be determined.

According to embodiments of the present disclosure, determining, from at least one standardized address, the first target standardized address corresponding to the content to be recognized may include: for each location entity in each standardized address, determining a first occurrence number of the location entity in the at least one standardized address; for each standardized address, determining a target number corresponding to the standardized address according to a maximum one of the first occurrence numbers corresponding to various location entities in the standardized address, so as to obtain at least one target number corresponding to the at least one standardized address; determining a maximum target number from the at least one target number; and determining the standardized address corresponding to the maximum target number as the first target standardized address.

According to embodiments of the present disclosure, it is possible to retrieve a plurality of location entities by performing the location recognition on the content to be recognized for describing the event and performing a fuzzy matching on the recognized location data. For each location entity, a standard address of province-prefecture/city-district/county may be retrieved from the address graph, so that a plurality of standard addresses of province-prefecture/city-district/county corresponding to the content to be recognized may be obtained. For each level of location entity in each address of province-prefecture/city-district/county, an occurrence number of the location entity in the plurality of standard addresses of province-prefecture/city-district/county may be calculated to obtain a first occurrence number. For example, two location data, including "SZ" and "SJZC", may be recognized from a text to be recognized. A standardized address "GD Province-SZ City" may be obtained by normalizing "SZ" through the address graph, and a standardized address "GD Province-SZ City-NS District" and a standardized address "HN Province-CS City" may be obtained by normalizing "SJZC" through the address graph. By counting the occurrence number of each level of location entity in the standardized addresses "GD Province-SZ City", "GD Province-SZ City-NS District" and "HN Province-CS City", it may be obtained that, for example, the first occurrence number of GD Province is two, the first occurrence number of SZ City is two, the first occurrence number of NS District is one, the first occurrence number of HN Province is one, and the first occurrence number of CS City is one.

According to embodiments of the present disclosure, it is possible to determine a target number corresponding to each standardized address by determining the maximum one of the occurrence numbers of various levels of location entities in the standardized address. The target number may represent the maximum occurrence number of the standardized address. For example, on the basis of the above-mentioned embodiments, it may be determined that the maximum occurrence number of "GD Province-SZ City" is two, the maximum occurrence number of "GD Province-SZ City-NS District" is two, and the maximum occurrence number of "HN Province-CS City" is one. By filtering out the standardized address with the smaller number (such as one), it may be determined that the first target standardized address for representing the place where the event occurs may include "GD Province-SZ City" or "GD Province-SZ City-NS District".

Through embodiments of the present disclosure described above, the standardized address that may best represent the place where the event occurs may be determined according to the occurrence number of the standardized address, and a determined result may be more accurate.

According to embodiments of the present disclosure, a plurality of standardized addresses may correspond to the maximum target number. Determining the standardized address corresponding to the maximum target number as the first target standardized address may include: determining, from the plurality of standardized addresses, the standardized address with a largest number of location entities as the first target standardized address.

According to embodiments of the present disclosure, for example, the standardized addresses corresponding to the maximum target number include "GD Province-SZ City" and "GD Province-SZ City-NS District", which are substantially the same. Then the two standardized addresses may be de-duplicated according to the number of location entities included in "GD Province-SZ City" and the number of location entities included in "GD Province-SZ City-NS District". For example, "GD Province-SZ City-NS District" with a larger number of location entities may be determined as the first target standardized address.

Through embodiments of the present disclosure described above, a more fine-grained standardized address for representing the place where the event occurs may be obtained, and a fineness of the determined standardized address may be improved.

According to embodiments of the present disclosure, by performing the address retrieval and the address normalization based on the above-mentioned address graph, the standardized address related to a single content to be recognized may be determined, for example, the address recognition may be performed for single news. It is also possible to recognize, from a plurality of contents to be recognized for describing a same event, the standardized address for representing the place where the event occurs by performing the address retrieval and the address normalization based on the above-mentioned address graph.

According to embodiments of the present disclosure, in a case that the event is described by a plurality of contents to be recognized, the above-mentioned method of recognizing the address may further include the following steps. For each content to be recognized, a first target standardized address corresponding to the content to be recognized is determined, so as to obtain a plurality of first target standardized addresses; a preset field information corresponding to the event is determined; and if it is determined that the preset field information corresponds to a second target standardized address and that the plurality of first target standardized addresses and the second target standardized address have a same standardized address, then a third target standardized address for representing the place where the event occurs is determined according to the plurality of first target standardized addresses and the second target standardized address.

According to embodiments of the present disclosure, in an event analysis scenario of public opinion, a plurality of event-related contents to be recognized, such as news, may be acquired. Then, a multi-dimension analysis may be performed based on these news to determine an address of the event. Relevant news may be retrieved through a query or keyword. The above-mentioned preset field information may include a query or keyword for retrieving the above-mentioned plurality of contents to be recognized.

According to embodiments of the present disclosure, when it is necessary to perform an address recognition on the plurality of contents to be recognized, the address retrieval and the address normalization may be performed on each of the plurality of contents to be recognized based on the address graph, so as to obtain a plurality of first target standardized addresses. The address retrieval and the address normalization based on the address graph may include, for example, performing a location entity recognition for each content to be recognized, so as to obtain a target location entity; determining, for each type of location entity in the target location entity, a standardized address corresponding to the location entity according to the address graph, so as to obtain at least one standardized address; determining, from the at least one standardized address, a first target standardized address corresponding to the content to be recognized. Then, the standardized address for representing the place where the event occurs corresponding to the plurality of contents to be recognized, that is, the above-mentioned third target standardized address, may be determined according to the plurality of recognized first target standardized addresses and the second target standardized address corresponding to the preset field information.

For example, a plurality of relevant news may be retrieved through a query or keyword. By performing the address retrieval and the address normalization on the plurality of relevant news respectively based on the address graph, for example, a set of standardized addresses R may be obtained. The set R may include, for example, a plurality of first target standardized addresses corresponding to the plurality of relevant news, including two "BJ City-BJ City-CY District", one "BJ City-BJ City", one "JL Province-CC City-CY District", one "JS Province-NJ City-CY District", etc. By performing the address retrieval and the address normalization on the query or keyword based on the address graph, a set of disambiguated standard addresses Q may be obtained. For example, the query may be "Opening of the International Cultural Tourism Festival in CY District", then a location entity "CY District" may be extracted from the query, the type of the extracted location entity may be determined as standard district/standard county, and it may be determined according to the address graph that the set of standard addresses Q corresponding to the location entity may include "BJ City-BJ City-CY District", "JL Province-CC City-CY District", etc. In this case, the third target standardized address for representing the place where the event occurs described in the query may be determined according to the set R and the set Q. For example, it may be determined that the third target standardized address may be "BJ City-BJ City-CY District" and "JL Province-CC City-CY District" according to an intersection of the set R and the set Q, or it may be determined that the third target standardized address may be "BJ City-BJ City-CY District" according to the standardized address with a maximum occurrence number and a smallest granularity in the intersection of the set R and the set Q.

Through embodiments of the present disclosure described above, the address recognition is performed on a plurality of contents to be recognized related to the preset field information, and the standardized address for representing the place where the event occurs described by the preset field information is determined in combination with the address data contained in the preset field information, so that a more accurate and reliable address recognition result may be obtained.

According to embodiments of the present disclosure, determining the third target standardized address for representing the place where the event occurs according to the plurality of first target standardized addresses and the second target standardized address may include: if the same standardized address includes one standardized address, then determining the same standardized address as the third target standardized address.

According to embodiments of the present disclosure, the same standardized address may refer to the intersection of the set R and the set Q. In a case that the intersection of the set R and the set Q only includes "BJ City-BJ City-CY District", the "BJ City-BJ City-CY District" may be determined as the third target standardized address for representing the place where the event occurs.

Through embodiments of the present disclosure described above, the standardized address for representing the place where the event occurs may be determined according to the intersection of the set of standardized addresses corresponding to the preset field information and the set of standardized addresses corresponding to the plurality of contents to be recognized, so that a more accurate and reliable address recognition result may be obtained.

According to embodiments of the present disclosure, the standardized location entity may include at least one selected from a county-level location entity, a prefecture-level location entity, or a provincial-level location entity. Determining the third target standardized address for representing the place where the event occurs according to the plurality of first target standardized addresses and the second target standardized address may include: if the same standardized address includes a plurality of standardized addresses and that the same standardized address includes at least one first county-level location entity, then acquiring, from the same standardized address, a standardized address corresponding to a first county-level location entity that meets a first predetermined condition, and determining the standardized address as the third target standardized address; if the same standardized address includes a plurality of standardized addresses and that the same standardized address includes at least one first prefecture-level location entity and does not include the first county-level location entity, then acquiring, from the same standardized address, a standardized address corresponding to a first prefecture-level location entity that meets a second predetermined condition, and determining the standardized address as the third target standardized address; and if the same standardized address includes a plurality of standardized addresses and that the same standardized address includes the first provincial-level location entity and does not include the first county-level location entity and the first prefecture-level location entity, then acquiring, from the same standardized address, a standardized address corresponding to the first provincial-level location entity that meets a third predetermined condition, and determining the standardized address as the third target standardized address.

According to embodiments of the present disclosure, in a case that the same standardized address includes at least one first county-level location entity, the determined third target standardized address may be accurate to a county-level granularity, for example, it may be expressed as a standardized address in a form of XX Province-XX Prefecture/City-XX District/County. In a case that the same standardized address includes at least one first prefecture-level location entity and includes no first county-level location entity, the determined third target standardized address may be accurate to a prefecture-level granularity, for example, it may be expressed as a standardized address in a form of XX Province-XX Prefecture/City. In a case that the same standardized address includes the first provincial-level location entity and includes no first county-level location entity and no first prefecture-level location entity, the determined third target standardized address may be accurate to a provincial-level granularity, for example, it may be expressed as a standardized address in a form of XX Province.

According to embodiments of the present disclosure, the first predetermined condition, the second predetermined condition and the third predetermined condition may include but not be limited to at least one selected from: an occurrence number of a corresponding level of location entity is greater than a predetermined threshold, an occurrence number of an upper level of location entity corresponding to the corresponding level of location entity is greater than a predetermined threshold, or the like.

Through embodiments of the present disclosure described above, the method of determining the standardized address for representing the place where the event occurs may be constructed based on standardized address entities of various granularities, and the standardized address determined by the method may be better matched with the address of the place where the event actually occurred.

According to embodiments of the present disclosure, the plurality of first target standardized addresses may include at least one second county-level location entity and at least one second prefecture-level location entity. The acquiring, from the same standardized address, the standardized address corresponding to the first county-level location entity that meets the first predetermined condition and determining the standardized address corresponding to the first county-level location entity that meets the first predetermined condition as the third target standardized address may include: for each second county-level location entity, determining a second occurrence number of the second county-level location entity in the plurality of first target standardized addresses; determining, from the at least one second county-level location entity, a predetermined number of target second county-level location entity, where a second occurrence number of the predetermined number of target second county-level location entity is greater than that of other one of the at least one second county-level location entity; for each second prefecture-level location entity, determining a third occurrence number of the second prefecture-level location entity in the plurality of first target standardized addresses; determining, from the at least one second prefecture-level location entity, a predetermined number of target second prefecture-level location entity, where a third occurrence number of the predetermined number of target second prefecture-level location entity is greater than that of other one of the at least one second prefecture-level location entity; if at least one first county-level location entity includes a target first county-level location entity same as the target second county-level location entity, then determining a first target prefecture-level location entity corresponding to the target first county-level location entity; and if the target second prefecture-level location entity includes the first target prefecture-level location entity, then determining a standardized address corresponding to the target first county-level location entity and the first target prefecture-level location entity as the third target standardized address.

According to embodiments of the present disclosure, a standardized address in the set Q may be recorded as *Qᵢ*, and a standardized address in the set R may be recorded as *Rⱼ.* A minimum value of i *and j* may be 1, a maximum value of i may be determined according to the number of standardized address in the set Q, and a maximum value of j may be determined according to the number of standardized address in the set R.

According to embodiments of the present disclosure, for all county-level location entities and prefecture-level location entities in the set R, every level of location entities may be sorted in descending order according to the occurrence numbers of the corresponding location entities. If the standardized address represented by *Rⱼ* is accurate to county-level, and the set Q includes Qi matched with the standardized address represented by *Rⱼ,* then it may be determined whether the county-level location entity in *Rⱼ* belongs to top *N₁* county-level location entity obtained by sorting all county-level location entities in the set R in descending order of the occurrence numbers. If the county-level location entity in *Rⱼ* belongs to top *Ni* county-level location entity, then it may be determined whether the prefecture-level location entity in *Rⱼ* belongs to top *N₂* prefecture-level location entity obtained by sorting all prefecture-level location entities in the set R in descending order of the occurrence numbers. If the prefecture-level location entity in *Rⱼ* belongs to top *N₂,* it may be determined that the county-level location entity in *Rⱼ* meets the first predetermined condition, and the standardized address of county-level granularity for representing the place where the event occurs, that is, the third target standardized address, may be determined according to the *Rⱼ* meeting the first predetermined condition. In this case, the county-level location entity in *Rⱼ* may represent the above-mentioned target first county-level location entity, the prefecture-level location entity in *Rⱼ* may represent the above-mentioned target first prefecture-level location entity. Top *N₁* may represent the above-mentioned predetermined number of target second county-level location entity, and top *N₂* may represent the above-mentioned predetermined number of target second prefecture-level location entity. A value *of Ni* and a value of *N₂* may be the same or different, which is not limited here.

It should be noted that, if a plurality of standardized addresses *Rⱼ* meet the first predetermined condition, it is possible to determine, according to the third occurrence numbers of the prefecture-level location entities in the standardized addresses *Rⱼ* meeting the first predetermined condition, the standardized address *Rⱼ* corresponding to the prefecture-level location entity with the maximum third occurrence number as the third target standardized address.

Through embodiments of the present disclosure described above, it is possible to determine the standardized address better matched with the place where the event occurs by corresponding methods, and the determined standardized address of county-level granularity may be better matched with the place where the event occurs.

According to embodiments of the present disclosure, the plurality of first target standardized addresses may include at least one third prefecture-level location entity. The acquiring, from the same standardized address, the standardized address corresponding to the first prefecture-level location entity that meets the second predetermined condition, and determining the standardized address corresponding to the first prefecture-level location entity that meets the second predetermined condition as the third target standardized address may include: for each third prefecture-level location entity, determining a fourth occurrence number of the third prefecture-level location entity in the plurality of first target standardized addresses; determining, from the at least one third prefecture-level location entity, a predetermined number of target third prefecture-level location entity, where the fourth occurrence number of the predetermined number of target third prefecture-level location entity is greater than that of other one of the at least one third prefecture-level location entity; if the at least one first prefecture-level location entity includes a target first prefecture-level location entity same as the target third prefecture-level location entity, the standardized address corresponding to the target first prefecture-level location entity is determined as the third target standardized address.

According to embodiments of the present disclosure, for all prefecture-level location entities in the set R, the prefecture-level location entities may be sorted in descending order according to the occurrence numbers of the prefecture-level location entities. If the standardized address represented by *Rⱼ* is accurate to prefecture-level, and the set Q includes Qi matched with the standardized address represented by *Rⱼ,* it may be determined whether the prefecture-level location entity in *Rⱼ* belongs to top *N₃* prefecture-level location entity obtained by sorting all prefecture-level location entities in the set R in descending order of the occurrence numbers. If the prefecture-level location entity in *Rⱼ* belongs to top *N₃,* it may be determined that the prefecture-level location entity in *Rⱼ* meets the second predetermined condition, and the standardized address of prefecture-level granularity for representing the place where the event occurs, that is, the third target standardized address, may be determined according to the *Rⱼ* meeting the second predetermined condition. In this case, the prefecture-level location entity in *Rⱼ* may represent the above-mentioned target first prefecture-level location entity. Top *N₃* may represent the above-mentioned predetermined number of target third prefecture-level location entity. A value of *N₃* may be customized to be same as or different from the values *of Ni* and *N₂,* which is not limited here.

It should be noted that, if a plurality of standardized addresses *Rⱼ* meet the second predetermined condition, it is possible to determine, according to the fourth occurrence numbers of the prefecture-level location entities in the standardized addresses *Rⱼ* meeting the second predetermined condition, the standardized address *Rⱼ* corresponding to the prefecture-level location entity with the maximum fourth occurrence number as the third target standardized address.

Through embodiments of the present disclosure described above, it is possible to determine the standardized address better matched with the place where the event occurs by corresponding methods, and the determined standardized address of prefecture-level granularity may be better matched with the place where the event occurs.

According to embodiments of the present disclosure, the plurality of first target standardized addresses may include at least one second provincial-level location entity. The acquiring, from the same standardized address, the standardized address corresponding to the first provincial-level location entity that meets the third predetermined condition, and determining the standardized address corresponding to the first provincial-level location entity that meets the third predetermined condition as the third target standardized address may include: for each second provincial-level location entity, determining a fifth occurrence number of the second provincial-level location entity in the plurality of first target standardized addresses; determining, from the at least one second provincial-level location entity, a predetermined number of target second provincial-level location entity, where a fifth occurrence number of the predetermined number of target second provincial-level location entity is greater than that of other one of the at least one second provincial-level location entity; if at least one first provincial-level location entity includes a target first provincial-level location entity same as the target second provincial-level location entity, the standardized address corresponding to the target first provincial-level location entity with the maximum fifth occurrence number is determined as the third target standardized address.

According to embodiments of the present disclosure, for all provincial-level location entities in the set R, the provincial-level location entities may be sorted in descending order according to the occurrence numbers of the provincial-level location entities. If the standardized address represented by *Rⱼ* is accurate to provincial-level, and the set Q includes Qi matched with the standardized address represented by *Rⱼ,* it may be determined whether the provincial-level location entity in *Rⱼ* belongs to top *N₄* provincial-level location entity obtained by sorting all provincial-level location entities in the set R in descending order of the occurrence numbers. If the provincial-level location entity in *Rⱼ* belongs to top *N₄*, it may be determined that the provincial-level location entity in *Rⱼ* meets the third predetermined condition, and according to the fifth occurrence number of the provincial-level location entity in the *Rⱼ* meeting the third predetermined condition, the *Rⱼ* corresponding to the provincial-level location entity with the maximum fifth occurrence number may be determined as the standardized address of provincial-level granularity for representing the place where the event occurs, that is, the third target standardized address. In this case, the provincial-level location entity in *Rⱼ* may represent the above-mentioned target first provincial-level location entity. Top *N₄* may represent the above-mentioned predetermined number of target second provincial-level location entity. A value of *N₄* may be customized to be same as or different from the values of *N₁, N₂* and *N₃,* which is not limited here.

Through embodiments of the present disclosure described above, it is possible to determine the standardized address better matched with the place where the event occurs by corresponding methods, and the determined standardized address of provincial-level granularity may be better matched with the place where the event occurs.

According to embodiments of the present disclosure, in a case of a plurality of contents to be recognized for describing the event, the above-mentioned method of recognizing the address may further include: determining the third target standardized address for representing the place where the event occurs according to the plurality of first target standardized addresses, in a case that it is determined that no second target standardized address corresponds to the preset field information, or that the plurality of first target standardized addresses does not include a same standardized address as the second target standardized address.

According to embodiments of the present disclosure, in a case that the set of disambiguated standard addresses Q obtained by performing the address retrieval and the address normalization on the query or keyword based on the address graph is an empty set, or the set Q is not an empty set but the set of standardized addresses R obtained by performing the address retrieval and the address normalization based on the address graph respectively on the plurality of relevant news retrieved based on the query or keyword has no intersection with the set Q, the third target standardized address for representing the place where the event occurs may be determined according to the standardized address in the set R. For example, in a case that the set R includes only one standardized address, the standardized address may be determined as the third target standardized address for representing the place where the event occurs. In a case that the set R includes a plurality of standardized addresses, the standardized address corresponding to at least one of the county-level location entity, the prefecture-level location entity or the provincial-level location entity with the maximum occurrence number may be determined as the third target standardized address according to the occurrence numbers of each level of location entities in the plurality of standardized addresses.

Through embodiments of the present disclosure described above, in a case that the preset field information contains no address data, it is also possible to obtain an accurate and reliable address recognition result by performing the address recognition on a plurality of contents to be recognized related to the preset field information to determine the standardized address for representing the place where the event occurs described by the preset field information.

According to embodiments of the present disclosure, determining the third target standardized address for representing the place where the event occurs according to the plurality of first target standardized addresses may include: if the plurality of first target standardized addresses include at least one third county-level location entity, then acquiring, from the plurality of first target standardized addresses, a standardized address corresponding to a third county-level location entity that meets a fourth predetermined condition, and determining the standardized address as the third target standardized address; if the plurality of first target standardized addresses include at least one fourth prefecture-level location entity and does not include third county-level location entity, then acquiring, from the plurality of first target standardized addresses, a standardized address corresponding to a fourth prefecture-level location entity that meets a fifth predetermined condition, and determining the standardized address as the third target standardized address; and if the plurality of first target standardized addresses include a third provincial-level location entity and does not include third county-level location entity and fourth prefecture-level location entity, then acquiring, from the plurality of first target standardized addresses, a standardized address corresponding to the third provincial-level location entity that meets a sixth predetermined condition, and determining the standardized address as the third target standardized address.

According to embodiments of the present disclosure, in a case that the plurality of first target standardized addresses include at least one third county-level location entity, the determined third target standardized address may be accurate to county-level granularity, for example, it may be expressed as a standardized address in a form of XX Province-XX Prefecture/City-XX District/County. In a case that the plurality of first target standardized addresses include at least one fourth prefecture-level location entity and include no third county-level location entity, the determined third target standardized address may be accurate to prefecture-level granularity, for example, it may be expressed as a standardized address in a form of XX Province-XX Prefecture/City. In a case that the plurality of first target standardized addresses include the third provincial-level location entity and include no third county-level location entity and no fourth prefecture-level location entity, the determined third target standardized address may be accurate to provincial-level granularity, for example, it may be expressed as a standardized address in a form of XX Province.

According to embodiments of the present disclosure, the fourth predetermined condition, the fifth predetermined condition and the sixth predetermined condition may include but not be limited to at least one selected from: the occurrence number of the corresponding level of location entity is greater than a predetermined threshold, the occurrence number of an upper level of location entity corresponding to the corresponding level of location entity is greater than a predetermined threshold, or the like.

Through embodiments of the present disclosure described above, the method of determining the standardized address for representing the place where the event occurs may be constructed based on standardized address entities of various granularities, and the standardized address determined by the method may be better matched with the address of the place where the event actually occurred.

According to embodiments of the present disclosure, the plurality of first target standardized addresses may also include at least one fifth prefecture-level location entity. The acquiring, from the plurality of first target standardized addresses, the standardized address corresponding to the third county-level location entity that meets the fourth predetermined condition, and determining the standardized address corresponding to the third county-level location entity that meets the fourth predetermined condition as the third target standardized address may include: for each third county-level location entity, determining a sixth occurrence number of the third county-level location entity in the plurality of first target standardized addresses; if the sixth occurrence number is less than a second predetermined threshold, then acquiring, from the plurality of first target standardized addresses, a standardized address corresponding to the fourth prefecture-level location entity that meets the fifth predetermined condition, and determining the standardized address as the third target standardized address; if the sixth occurrence number is greater than or equal to the second predetermined threshold, then determining a second target prefecture-level location entity corresponding to a target third county-level location entity whose sixth occurrence number is greater than or equal to the second predetermined threshold; for each fifth prefecture-level location entity, determining a seventh occurrence number of the fifth prefecture-level location entity in the plurality of first target standardized addresses; determining, from the at least one fifth prefecture-level location entity, a predetermined number of target fifth prefecture-level location entity, where the seventh occurrence number of the predetermined number of target fifth prefecture-level location entity is greater than that of other one of the at least one fifth prefecture-level location entity; and if the target fifth prefecture-level location entity includes the second target prefecture-level location entity, a standardized address corresponding to the target third county-level location entity and the second target prefecture-level location entity is determined as the third target standardized address.

According to embodiments of the present disclosure, if the set R is accurate to county-level granularity, for all county-level location entities and prefecture-level location entities in the set R, every level of location entities may be sorted in descending order according to the occurrence numbers of the corresponding location entities. If an occurrence number of a county-level location entity is less than a predetermined threshold, the county-level location entity may be ignored, and a process of traversing according to the occurrence number of the city-level location entity and determining the standardized address may be started. If the occurrence number of the county-level location entity is greater than or equal to the predetermined threshold, it may be determined whether the prefecture-level location entity corresponding to the county-level location entity belongs to top *N₅* prefecture-level location entity obtained by sorting all prefecture-level location entities in the set R in descending order of the occurrence numbers. If the prefecture-level location entity corresponding to the county-level location entity belongs to top *N₅,* it may be determined that the county-level location entity meets the fourth predetermined condition, and the standardized address of county-level granularity for representing the place where the event occurs, that is, the third target standardized address, may be determined according to the county-level location entity meeting the fourth predetermined condition. Top *N₅* may represent the above-mentioned predetermined number of target fifth prefecture-level location entity. A value *of Ns* may be customized to be same as or different from the values of *N₁, N₂, N₃* and *N₄,* which is not limited here.

It should be noted that if a plurality of county-level location entities meet the fourth predetermined condition, it is possible to determine, according to a seventh occurrence number of a prefecture-level location entity corresponding to the county-level location entities that meet the fourth predetermined condition, the standardized address corresponding to the prefecture-level location entity with the maximum seventh occurrence number and corresponding to the county-level location entities that meet the fourth predetermined condition may be determined as the third target standardized address.

Through embodiments of the present disclosure described above, it is possible to determine the standardized address better matched with the place where the event occurs by corresponding methods, and the determined standardized address of county-level granularity may be better matched with the place where the event occurs.

According to embodiments of the present disclosure, the acquiring, from the plurality of first target standardized addresses, the standardized address corresponding to the fourth prefecture-level location entity that meets the fifth predetermined condition, and determining the standardized address corresponding to the fourth prefecture-level location entity that meets the fifth predetermined condition as the third target standardized address may include: for each fourth prefecture-level location entity, determining an eighth occurrence number of the fourth prefecture-level location entity in the plurality of first target standardized addresses; if the eighth occurrence number is less than a third predetermined threshold, then acquiring, from the plurality of first target standardized addresses, a standardized address corresponding to the third provincial-level location entity that meets the sixth predetermined condition, and determining the standardized address as the third target standardized address; and if the eighth occurrence number is greater than or equal to the third predetermined threshold, determining a standardized address corresponding to a target fourth prefecture-level location entity with a maximum eighth occurrence number as the third target standardized address.

According to embodiments of the present disclosure, if the set R is accurate to prefecture-level granularity, for all prefecture-level location entities in the set R, the prefecture-level location entities may be sorted in descending order according to the occurrence numbers of the corresponding prefecture-level location entities. If an occurrence number of a prefecture-level location entity is less than a predetermined threshold, the prefecture-level location entity may be ignored, and a process of traversing according to the occurrence number of the provincial-level location entity and determining the standardized address may be started. If the occurrence number of the prefecture-level location entity is greater than the predetermined threshold, it may be determined that the prefecture-level location entity meets a fifth predetermined condition, and the standardized address of prefecture-level granularity for representing the place where the event occurs, that is, the third target standardized address, may be determined according to the prefecture-level location entity with the maximum occurrence number among the prefecture-level location entities meeting the fifth predetermined condition.

Through embodiments of the present disclosure described above, it is possible to determine the standardized address better matched with the place where the event occurs by corresponding methods, and the determined standardized address of prefecture-level granularity may be better matched with the place where the event occurs.

According to embodiments of the present disclosure, the acquiring, from the plurality of first target standardized addresses, the standardized address corresponding to the third provincial-level location entity that meets the sixth predetermined condition and determining the standardized address corresponding to the third provincial-level location entity that meets the sixth predetermined condition as the third target standardized address may include: for each third provincial-level location entity, determining a ninth occurrence number of the third provincial-level location entity in the plurality of first target standardized addresses; and determining the standardized address corresponding to a target third provincial-level location entity with a maximum ninth occurrence number as the third target standardized address.

According to embodiments of the present disclosure, if the set R is accurate to provincial-level granularity, for all provincial-level location entities in the set R, the provincial-level location entities may be sorted in descending order according to the occurrence numbers of the corresponding provincial-level location entities. It may be determined that the provincial-level location entity with the maximum occurrence number meets the sixth predetermined condition, and the standardized address of provincial -level granularity for representing the place where the event occurs, that is, the third target standardized address, may be determined according to the provincial-level location entity meeting the sixth predetermined condition.

Through embodiments of the present disclosure described above, it is possible to determine the standardized address better matched with the place where the event occurs by corresponding methods, and the determined standardized address of provincial-level granularity may be better matched with the place where the event occurs.

According to embodiments of the present disclosure, if none of the above-mentioned conditions is met, it may be considered that the address for representing the place where the event occurs is ambiguous. In this case, it may be determined that the address for representing the place where the event occurs does not exist.

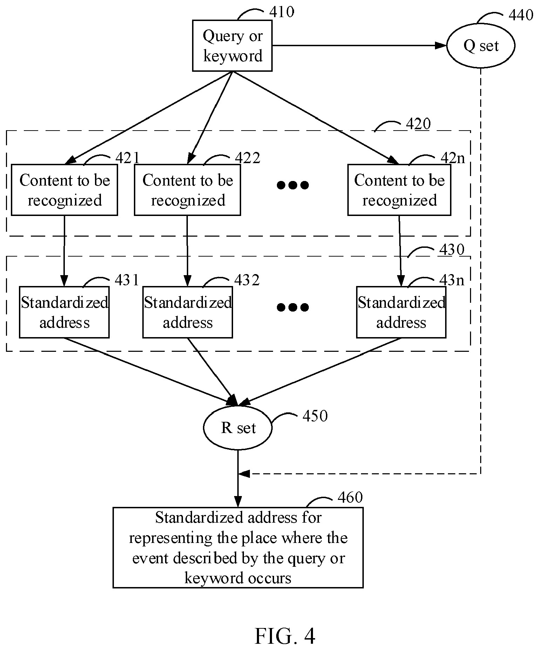

FIG. 4 schematically shows a schematic diagram of performing an address recognition for an event described by a query or keyword according to embodiments of the present disclosure.

As shown in FIG. 4, when a retrieval is performed based on a query or keyword 410, for example, a plurality of contents to be recognized 420 may be obtained. The plurality of contents to be recognized 420 may include, for example, contents to be recognized 421, 422,..., 42n, etc. A process of an address retrieval and an address normalization based on the address graph may be performed on each content to be recognized, and for example, a plurality of standardized addresses 430 corresponding to the plurality of contents to be recognized 420 may be obtained. The plurality of standardized addresses 430 may include standardized addresses 431, 432,..., 43n, etc. corresponding to the contents to be recognized 421, 422,..., 42n, etc. A set of standardized addresses R related to the plurality of contents to be recognized 420 may be determined according to the standardized addresses 431, 432,..., 43n. In a case that the query or keyword 410 contains address data, by performing the process of the address retrieval and the address normalization based on the address graph on the query or keyword, a set of disambiguated standard addresses Q may be obtained. In a case that the set R and the set Q have an intersection, a standardized address 460 for representing the place where the event occurs described by the query or keyword may be determined according to the set R and the set Q, in combination with one selected from the first predetermined condition, the second predetermined condition, or the third predetermined condition described above. In a case that the query or keyword 410 contain no address data, or the set R and the set Q have no intersection, the standardized address 460 for representing the place where the event occurs described by the query or keyword may be determined according to the set R, in combination with one selected from the fourth predetermined condition, the fifth predetermined condition, or the sixth predetermined condition.

Through embodiments of the present disclosure described above, it is possible to obtain zero, one or more standardized addresses for representing the place where the event occurs described by the query or keyword based on a plurality of contents to be recognized retrieved based on an input of the query or keyword.

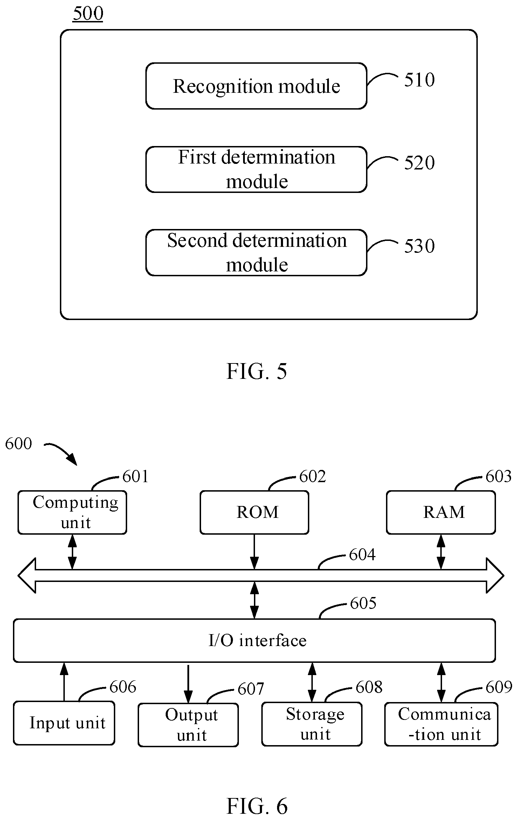

FIG. 5 schematically shows a block diagram of an apparatus of recognizing an address according to embodiments of the present disclosure.

As shown in FIG. 5, an apparatus 500 of recognizing an address includes a recognition module 510, a first determination module 520, and a second determination module 530.

The recognition module 510 may be used to perform a location entity recognition on a content to be recognized for describing an event, so as to obtain a target location entity. The target location entity includes at least one selected from: a standardized location entity, an alias location entity, or a landmark location entity.

The first determination module 520 may be used to determine, for each type of location entity in the target location entity, a standardized address corresponding to the location entity according to an address graph, so as to obtain at least one standardized address. The address graph includes a standardized location entity, an alias location entity, a landmark location entity, and a corresponding relationship between location entities.

The second determination module 530 may be used to determine, from the at least one standardized address, a first target standardized address corresponding to the content to be recognized. The first target standardized address is used to represent a place where the event occurs.

According to embodiments of the present disclosure, in a case that the target location entity includes the standardized location entity, the first determination module includes a first determination unit and a second determination unit.

The first determination unit may be used to determine, according to the address graph, a first standardized address corresponding to the standardized location entity.

The second determination unit may be used to determine the first standardized address as a standardized address corresponding to the standardized location entity.

According to embodiments of the present disclosure, in a case that the target location entity includes the alias location entity, the first determination module includes a third determination unit, a fourth determination unit, and a fifth determination unit.

The third determination unit may be used to determine, according to the address graph, a first target standardized location entity corresponding to the alias location entity.

The fourth determination unit may be used to determine, according to the address graph, a second standardized address corresponding to the first target standardized location entity.

The fifth determination unit may be used to determine the second standardized address as a standardized address corresponding to the alias location entity.

According to embodiments of the present disclosure, in a case that the target location entity includes the landmark location entity, the first determination module includes a sixth determination unit, a seventh determination unit, an eighth determination unit, and a ninth determination unit.

The sixth determination unit may be used to determine a target landmark location entity from the address graph, and a similarity between the target landmark location entity and the landmark location entity is greater than a first predetermined threshold.

The seventh determination unit may be used to determine, according to the address graph, a second target standardized location entity corresponding to the target landmark location entity.

The eighth determination unit may be used to determine, according to the address graph, a third standardized address corresponding to the second target standardized location entity.

The ninth determination unit may be used to determine the third standardized address as a standardized address corresponding to the landmark location entity.

According to embodiments of the present disclosure, the second determination module includes a tenth determination unit, an eleventh determination unit, a twelfth determination unit, and a thirteenth determination unit

The tenth determination unit may be used to determine, for each location entity in each standardized address, a first occurrence number of the location entity in the at least one standardized address.

The eleventh determination unit may be used to determine, for each standardized address, a target number corresponding to the standardized address, according to a maximum one of the first occurrence numbers corresponding to the location entities in the standardized address, so as to obtain at least one target number corresponding to the at least one standardized address.

The twelfth determination unit may be used to determine a maximum target number from the at least one target number.

The thirteenth determination unit may be used to determine a standardized address corresponding to the maximum target number as the first target standardized address.

According to embodiments of the present disclosure, a plurality of standardized addresses correspond to the maximum target number. The thirteenth determination unit includes a first determination sub-unit.

The first determination sub-unit may be used to determine, from the plurality of standardized addresses, a standardized address with a largest number of location entities as the first target standardized address.

According to embodiments of the present disclosure, the apparatus of recognizing the address may further include a third determination module, a fourth determination module, and a fifth determination module.

The third determination module may be used to determine, in a case of a plurality of contents to be recognized for describing the event, for each content to be recognized, a first target standardized address corresponding to the content to be recognized, so as to obtain a plurality of first target standardized addresses.

The fourth determination module may be used to determine a preset field information corresponding to the event.

The fifth determination module may be used to determine, in response to a determination that the preset field information corresponds to a second target standardized address and that the plurality of first target standardized addresses and the second target standardized address have a same standardized address, a third target standardized address for representing the place where the event occurs, according to the plurality of first target standardized addresses and the second target standardized address.

According to embodiments of the present disclosure, the fifth determination module includes a fourteenth determination unit.

The fourteenth determination unit may be used to determine the same standardized address as the third target standardized address in response to the same standardized address including one standardized address.

According to embodiments of the present disclosure, the standardized location entity includes at least one selected from: a county-level location entity, a prefecture-level location entity, or a provincial-level location entity. The fifth determination module includes a fifteenth determination unit, a sixteenth determination unit, and a seventeenth determination unit.

The fifteenth determination unit may be used to acquire, from the same standardized address, a standardized address corresponding to a first county-level location entity meeting a first predetermined condition and determine the standardized address corresponding to the first county-level location entity meeting the first predetermined condition as the third target standardized address, in response to the same standardized address including a plurality of standardized addresses and the same standardized address including at least one first county-level location entity.

The sixteenth determination unit may be used to acquire, from the same standardized address, a standardized address corresponding to a first prefecture-level location entity meeting a second predetermined condition and determine the standardized address corresponding to the first prefecture-level location entity meeting the second predetermined condition as the third target standardized address, in response to the same standardized address including a plurality of standardized addresses and the same standardized address including at least one prefecture-level location entity and including no first county-level location entity.

The seventeenth determination unit may be used to acquire, from the same standardized address, a standardized address corresponding to a first provincial-level location entity meeting a third predetermined condition and determine the standardized address corresponding to the first provincial-level location entity meeting the third predetermined condition as the third target standardized address, in response to the same standardized address including a plurality of standardized addresses and the same standardized address including the first provincial-level location entity and including no first county-level location entity and no prefecture-level location entity.

According to embodiments of the present disclosure, the plurality of first target standardized addresses include at least one second county-level location entity and at least one second prefecture-level location entity. The fifteenth determination unit includes a second determination sub-unit, a third determination sub-unit, a fourth determination sub-unit, a fifth determination sub-unit, a sixth determination sub-unit, and a seventh determination sub-unit.

The second determination sub-unit may be used to determine, for each second county-level location entity, a second occurrence number of the second county-level location entity in the plurality of first target standardized addresses.

The third determination sub-unit may be used to determine, from the at least one second county-level location entity, a predetermined number of target second county-level location entity, where a second occurrence number of the predetermined number of target second county-level location entity is greater than that of other one of the at least one second county-level location entity.

The fourth determination sub-unit may be used to determine, for each second prefecture-level location entity, a third occurrence number of the second prefecture-level location entity in the plurality of first target standardized addresses.

The fifth determination sub-unit may be used to determine, from the at least one second prefecture-level location entity, a predetermined number of target second prefecture-level location entity, where a third occurrence number of the predetermined number of target second prefecture-level location entity is greater than that of other one of the at least one second prefecture-level location entity.

The sixth determination sub-unit may be used to determine, in response to the at least one first county-level location entity including a target first county-level location entity same as the target second county-level location entity, a first target prefecture-level location entity corresponding to the target first county-level location entity.

The seventh determination sub-unit may be used to determine a standardized address corresponding to the target first county-level location entity and corresponding to the first target prefecture-level location entity as the third target standardized address, in response to the target second prefecture-level location entity including the first target prefecture-level location entity.

According to embodiments of the present disclosure, the plurality of first target standardized addresses include at least one third prefecture-level location entity. The sixteenth determination unit includes an eighth determination sub-unit, a ninth determination sub-unit, and a tenth determination sub-unit.

The eighth determination sub-unit may be used to determine, for each third prefecture-level location entity, a fourth occurrence number of the third prefecture-level location entity in the plurality of first target standardized addresses.

The ninth determination sub-unit may be used to determine, from the at least one third prefecture-level location entity, a predetermined number of target third prefecture-level location entity, where a fourth occurrence number of the predetermined number of target third prefecture-level location entity is greater than that of other one of the at least one third prefecture-level location entity.

The tenth determination sub-unit may be used to determine, in response to the at least one first prefecture-level location entity including a target first prefecture-level location entity same as the target third prefecture-level location entity, a standardized address corresponding to the target first prefecture-level location entity as the third target standardized address.

According to embodiments of the present disclosure, the plurality of first target standardized addresses include at least one second provincial-level location entity. The seventeenth determination unit includes an eleventh determination sub-unit, a twelfth determination sub-unit, and a thirteenth determination sub-unit.

The eleventh determination sub-unit may be used to determine, for each second provincial-level location entity, a fifth occurrence number of the second provincial-level location entity in the plurality of first target standardized addresses.

The twelfth determination sub-unit may be used to determine, from the at least one second provincial-level location entity, a predetermined number of target second provincial-level location entity, where a fifth occurrence number of the predetermined number of target second provincial-level location entity is greater than that of other one of the at least one second provincial-level location entity.

The thirteenth determination sub-unit may be used to determine, in response to the at least one first provincial-level location entity including a target first provincial-level location entity same as the target second provincial-level location entity, a standardized address corresponding to the target first provincial-level location entity with a maximum fifth occurrence number as the third target standardized address.

According to embodiments of the present disclosure, the apparatus of recognizing the address may further include a sixth determination module.

The sixth determination module may be used to determine, according to the plurality of first target standardized addresses, the third target standardized address for representing the place where the event occurs, in response to a determination that no second target standardized address corresponds to the preset field information or the plurality of first target standardized addresses does not include a same standardized address as the second target standardized address.

According to embodiments of the present disclosure, the sixth determination module includes an eighteenth determination unit, a nineteenth determination unit, and a twentieth determination unit.

The eighteenth determination unit may be used to acquire, from the plurality of first target standardized addresses, a standardized address corresponding to a third county-level location entity meeting a fourth predetermined condition, and determine the standardized address corresponding to the third county-level location entity meeting the fourth predetermined condition as the third target standardized address, in response to the plurality of first target standardized addresses including at least one third county-level location entity.

The nineteenth determination unit may be used to acquire, from the plurality of first target standardized addresses, a standardized address corresponding to a fourth prefecture-level location entity meeting a fifth predetermined condition, and determine the standardized address corresponding to the fourth prefecture-level location entity meeting the fifth predetermined condition as the third target standardized address, in response to the plurality of first target standardized addresses including at least one fourth prefecture-level location entity and including no third county-level location entity.

The twentieth determination unit may be used to acquire, from the plurality of first target standardized addresses, a standardized address corresponding to a third provincial-level location entity meeting a sixth predetermined condition, and determine the standardized address corresponding to the third provincial-level location entity meeting the sixth predetermined condition as the third target standardized address, in response to the plurality of first target standardized addresses including the third provincial-level location entity and including no third county-level location entity and no fourth prefecture-level location entity.

According to embodiments of the present disclosure, the plurality of first target standardized addresses further include at least one fifth prefecture-level location entity. The eighteenth determination unit may include a fourteenth determination sub-unit, a fifteenth determination sub-unit, a sixteenth determination sub-unit, a seventeenth determination sub-unit, an eighteenth determination sub-unit, and a nineteenth determination sub-unit.

The fourteenth determination sub-unit may be used to determine, for each third county-level location entity, a sixth occurrence number of the third county-level location entity in the plurality of first target standardized addresses.

The fifteenth determination sub-unit may be used to acquire, from the plurality of first target standardized addresses, a standardized address corresponding to a fourth prefecture-level location entity meeting a fifth predetermined condition, and determine the standardized address corresponding to the fourth prefecture-level location entity meeting the fifth predetermined condition as the third target standardized address, in response to the sixth occurrence number being less than a second predetermined threshold.

The sixteenth determination sub-unit may be used to determine a second target prefecture-level location entity corresponding to a target third county-level location entity whose sixth occurrence number is greater than or equal to the second predetermined threshold, in response to the sixth occurrence number being greater than or equal to the second predetermined threshold.

The seventeenth determination sub-unit may be used to determine, for each fifth prefecture-level location entity, a seventh occurrence number of the fifth prefecture-level location entity in the plurality of first target standardized addresses.

The eighteenth determination sub-unit may be used to determine, from the at least one fifth prefecture-level location entity, a predetermined number of target fifth prefecture-level location entity, where the seventh occurrence number of the predetermined number of target fifth prefecture-level location entity is greater than that of other one of the at least one fifth prefecture-level location entity.

The nineteenth determination sub-unit may be used to determine a standardized address corresponding to the target third county-level location entity and corresponding to the second target prefecture-level location entity as the third target standardized address, in response to the target fifth prefecture-level location entity including the second target prefecture-level location entity.

According to embodiments of the present disclosure, the nineteenth determination unit includes a twentieth determination sub-unit, a twenty-first determination sub-unit, and a twenty-second determination sub-unit.

The twentieth determination sub-unit may be used to determine, for each fourth prefecture-level location entity, an eighth occurrence number of the fourth prefecture-level location entity in the plurality of first target standardized addresses.

The twenty-first determination sub-unit may be used acquire, from the plurality of first target standardized addresses, a standardized address corresponding to a third provincial-level location entity meeting a sixth predetermined condition, and determining the standardized address corresponding to the third provincial-level location entity meeting the sixth predetermined condition as the third target standardized address, in response to the eighth occurrence number being less than a third predetermined threshold.

The twenty-second determination sub-unit may be used to determine a standardized address corresponding to a target fourth prefecture-level location entity with a maximum eighth occurrence number as the third target standardized address, in response to the eighth occurrence number being greater than or equal to the third predetermined threshold.

According to embodiments of the present disclosure, the twentieth determination unit includes a twenty-third determination sub-unit and a twenty-fourth determination sub-unit.

The twenty-third determination sub-unit may be used to determine, for each third provincial-level location entity, a ninth occurrence number of the third provincial-level location entity in the plurality of first target standardized addresses.

The twenty-fourth determination sub-unit may be used to determine a standardized address corresponding to a target third provincial-level location entity with a maximum ninth occurrence number as the third target standardized address.

According to embodiments of the present disclosure, the present disclosure further provides an electronic device, a readable storage medium, and a computer program product.

According to embodiments of the present disclosure, an electronic device is provided, including: at least one processor; and a memory communicatively connected to the at least one processor. The memory stores instructions executable by the at least one processor, and the instructions, when executed by the at least one processor, cause the at least one processor to implement the method of recognizing the address described above.

According to embodiments of the present disclosure, a non-transitory computer-readable storage medium having computer instructions therein is provided, and the computer instructions are configured to cause a computer system to implement the method of recognizing the address described above.

According to embodiments of the present disclosure, a computer program product containing a computer program is provided, and the computer program, when executed by a processor, causes the processor to implement the method of recognizing the address described above.

FIG. 6 shows a schematic block diagram of an exemplary electronic device 600 for implementing embodiments of the present disclosure. The electronic device is intended to represent various forms of digital computers, such as a laptop computer, a desktop computer, a workstation, a personal digital assistant, a server, a blade server, a mainframe computer, and other suitable computers. The electronic device may further represent various forms of mobile devices, such as a personal digital assistant, a cellular phone, a smart phone, a wearable device, and other similar computing devices. The components as illustrated herein, and connections, relationships, and functions thereof are merely examples, and are not intended to limit the implementation of the present disclosure described and/or required herein.

As shown in FIG. 6, the electronic device 600 includes a computing unit 601 which may perform various appropriate actions and processes according to a computer program stored in a read only memory (ROM) 602 or a computer program loaded from a storage unit 608 into a random access memory (RAM) 603. In the RAM 603, various programs and data necessary for an operation of the electronic device 600 may also be stored. The computing unit 601, the ROM 602 and the RAM 603 are connected to each other through a bus 604. An input/output (I/O) interface 605 is also connected to the bus 604.

A plurality of components in the electronic device 600 are connected to the I/O interface 605, including: an input unit 606, such as a keyboard, or a mouse; an output unit 607, such as displays or speakers of various types; a storage unit 608, such as a disk, or an optical disc; and a communication unit 609, such as a network card, a modem, or a wireless communication transceiver. The communication unit 609 allows the electronic device 600 to exchange information/data with other devices through a computer network such as Internet and/or various telecommunication networks.

The computing unit 601 may be various general-purpose and/or dedicated processing assemblies having processing and computing capabilities. Some examples of the computing units 601 include, but are not limited to, a central processing unit (CPU), a graphics processing unit (GPU), various dedicated artificial intelligence (AI) computing chips, various computing units that run machine learning model algorithms, a digital signal processing processor (DSP), and any suitable processor, controller, microcontroller, etc. The computing unit 601 executes various methods and steps described above, such as the method of recognizing the address. For example, in some embodiments, the method of recognizing the address may be implemented as a computer software program which is tangibly embodied in a machine-readable medium, such as the storage unit 608. In some embodiments, the computer program may be partially or entirely loaded and/or installed in the electronic device 600 via the ROM 602 and/or the communication unit 609. The computer program, when loaded in the RAM 603 and executed by the computing unit 601, may execute one or more steps in the method of recognizing the address described above. Alternatively, in other embodiments, the computing unit 601 may be configured to perform the method of recognizing the address by any other suitable means (e.g., by means of firmware).

Various embodiments of the systems and technologies described herein may be implemented in a digital electronic circuit system, an integrated circuit system, a field programmable gate array (FPGA), an application specific integrated circuit (ASIC), an application specific standard product (ASSP), a system on chip (SOC), a complex programmable logic device (CPLD), a computer hardware, firmware, software, and/or combinations thereof. These various embodiments may be implemented by one or more computer programs executable and/or interpretable on a programmable system including at least one programmable processor. The programmable processor may be a dedicated or general-purpose programmable processor, which may receive data and instructions from a storage system, at least one input device and at least one output device, and may transmit the data and instructions to the storage system, the at least one input device, and the at least one output device.

Program codes for implementing the methods of the present disclosure may be written in one programming language or any combination of more programming languages. These program codes may be provided to a processor or controller of a general-purpose computer, a dedicated computer or other programmable data processing apparatus, such that the program codes, when executed by the processor or controller, cause the functions/operations specified in the flowcharts and/or block diagrams to be implemented. The program codes may be executed entirely on a machine, partially on a machine, partially on a machine and partially on a remote machine as a stand-alone software package or entirely on a remote machine or server.

In the context of the present disclosure, a machine-readable medium may be a tangible medium that may contain or store a program for use by or in connection with an instruction execution system, an apparatus or a device. The machine-readable medium may be a machine-readable signal medium or a machine-readable storage medium. The machine-readable medium may include, but is not limited to, an electronic, magnetic, optical, electromagnetic, infrared, or semiconductor system, apparatus or device, or any suitable combination of the above. More specific examples of the machine-readable storage medium may include an electrical connection based on one or more wires, a portable computer disk, a hard disk, a random access memory (RAM), a read only memory (ROM), an erasable programmable read only memory (EPROM or a flash memory), an optical fiber, a compact disk read only memory (CD-ROM), an optical storage device, a magnetic storage device, or any suitable combination of the above.

In order to provide interaction with the user, the systems and technologies described here may be implemented on a computer including a display device (for example, a CRT (cathode ray tube) or LCD (liquid crystal display) monitor) for displaying information to the user, and a keyboard and a pointing device (for example, a mouse or a trackball) through which the user may provide the input to the computer. Other types of devices may also be used to provide interaction with the user. For example, a feedback provided to the user may be any form of sensory feedback (for example, visual feedback, auditory feedback, or tactile feedback), and the input from the user may be received in any form (including acoustic input, voice input or tactile input).

The systems and technologies described herein may be implemented in a computing system including back-end components (for example, a data server), or a computing system including middleware components (for example, an application server), or a computing system including front-end components (for example, a user computer having a graphical user interface or web browser through which the user may interact with the implementation of the system and technology described herein), or a computing system including any combination of such back-end components, middleware components or front-end components. The components of the system may be connected to each other by digital data communication (for example, a communication network) in any form or through any medium. Examples of the communication network include a local area network (LAN), a wide area network (WAN), and the Internet.

The computer system may include a client and a server. The client and the server are generally far away from each other and usually interact through a communication network. The relationship between the client and the server is generated through computer programs running on the corresponding computers and having a client-server relationship with each other. The server may be a cloud server, a server of a distributed system, or a server combined with a block-chain.

It should be understood that steps of the processes illustrated above may be reordered, added or deleted in various manners. For example, the steps described in the present disclosure may be performed in parallel, sequentially, or in a different order, as long as a desired result of the technical solution of the present disclosure may be achieved. This is not limited in the present disclosure.

The above-mentioned specific embodiments do not constitute a limitation on the scope of protection of the present disclosure. Those skilled in the art should understand that various modifications, combinations, sub-combinations and substitutions may be made according to design requirements and other factors. Any modifications, equivalent replacements and improvements made within the spirit and principles of the present disclosure shall be contained in the scope of protection of the present disclosure.

## Claims

1. A method of recognizing an address, comprising:
performing (S210) a location entity recognition on a content to be recognized for describing an event, so as to obtain a target location entity, wherein the target location entity comprises at least one selected from: a standardized location entity, an alias location entity, or a landmark location entity;
determining (S220), for each type of location entity in the target location entity, a standardized address corresponding to the location entity according to an address graph, so as to obtain at least one standardized address, wherein the address graph comprises a standardized location entity, an alias location entity, a landmark location entity, and a corresponding relationship between location entities; and
determining (S230), from the at least one standardized address, a first target standardized address corresponding to the content to be recognized, wherein the first target standardized address is configured to represent a place where the event occurs.

2. The method according to claim 1, wherein the target location entity comprises the standardized location entity, and the determining a standardized address corresponding to the location entity according to an address graph comprises:
determining, according to the address graph, a first standardized address corresponding to the standardized location entity; and
determining the first standardized address as a standardized address corresponding to the standardized location entity.

3. The method according to claim 1, wherein the target location entity comprises the alias location entity, and the determining a standardized address corresponding to the location entity according to an address graph comprises:
determining, according to the address graph, a first target standardized location entity corresponding to the alias location entity;
determining, according to the address graph, a second standardized address corresponding to the first target standardized location entity; and
determining the second standardized address as a standardized address corresponding to the alias location entity.

4. The method according to claim 1, wherein the target location entity comprises the landmark location entity, and the determining a standardized address corresponding to the location entity according to an address graph comprises:
determining a target landmark location entity from the address graph, wherein a similarity between the target landmark location entity and the landmark location entity is greater than a first predetermined threshold;
determining, according to the address graph, a second target standardized location entity corresponding to the target landmark location entity;
determining, according to the address graph, a third standardized address corresponding to the second target standardized location entity; and
determining the third standardized address as a standardized address corresponding to the landmark location entity.

5. The method according to claim 1, wherein the determining, from the at least one standardized address, a first target standardized address corresponding to the content to be recognized comprises:
determining, for each location entity in each standardized address, a first occurrence number of the location entity in the at least one standardized address;
determining, for each standardized address, a target number corresponding to the standardized address, according to a maximum one of the first occurrence numbers corresponding to the location entities in the standardized address, so as to obtain at least one target number corresponding to the at least one standardized address;
determining a maximum target number from the at least one target number; and
determining a standardized address corresponding to the maximum target number as the first target standardized address.

6. The method according to claim 5, wherein a plurality of standardized addresses correspond to the maximum target number,
the determining a standardized address corresponding to the maximum target number as the first target standardized address comprises:
determining, from the plurality of standardized addresses, a standardized address with a largest number of location entities as the first target standardized address.

7. The method according to claim 1, wherein in a case that the event is described by a plurality of contents to be recognized, the method further comprises:
determining, for each content to be recognized, a first target standardized address corresponding to the content to be recognized, so as to obtain a plurality of first target standardized addresses;
determining a preset field information corresponding to the event; and
in response to a determination that the preset field information corresponds to a second target standardized address and that the plurality of first target standardized addresses and the second target standardized address have a same standardized address, determining a third target standardized address for representing the place where the event occurs according to the plurality of first target standardized addresses and the second target standardized address.

8. The method according to claim 7, wherein the determining a third target standardized address for representing the place where the event occurs according to the plurality of first target standardized addresses and the second target standardized address comprises:
determining the same standardized address as the third target standardized address, in response to the same standardized address comprising one standardized address.

9. The method according to claim 7, wherein the standardized location entity comprises at least one selected from: a county-level location entity, a prefecture-level location entity, or a provincial-level location entity,
the determining a third target standardized address for representing the place where the event occurs according to the plurality of first target standardized addresses and the second target standardized address comprises:
in response to the same standardized address comprising a plurality of standardized addresses, and the same standardized address comprising at least one first county-level location entity,
acquiring, from the same standardized address, a standardized address corresponding to a first county-level location entity that meets a first predetermined condition, and determining the standardized address corresponding to the first county-level location entity that meets the first predetermined condition as the third target standardized address;
in response to the same standardized address comprising a plurality of standardized addresses, and the same standardized address comprising at least one prefecture-level location entity and comprising no first county-level location entity,
acquiring, from the same standardized address, a standardized address corresponding to a first prefecture-level location entity that meets a second predetermined condition, and determining the standardized address corresponding to the first prefecture-level location entity that meets the second predetermined condition as the third target standardized address; and
in response to the same standardized address comprising a plurality of standardized addresses, and the same standardized address comprising the first provincial-level location entity and comprising no first county-level location entity and no prefecture-level location entity,
acquiring, from the same standardized address, a standardized address corresponding to a first provincial-level location entity that meets a third predetermined condition, and determining the standardized address corresponding to the first provincial-level location entity that meets the third predetermined condition as the third target standardized address.

10. The method according to claim 9, wherein the plurality of first target standardized addresses comprise at least one second county-level location entity and at least one second prefecture-level location entity,
the acquiring, from the same standardized address, a standardized address corresponding to a first county-level location entity that meets a first predetermined condition, and determining the standardized address corresponding to the first county-level location entity that meets the first predetermined condition as the third target standardized address comprises:
determining, for each second county-level location entity, a second occurrence number of the second county-level location entity in the plurality of first target standardized addresses;
determining, from the at least one second county-level location entity, a predetermined number of target second county-level location entity, wherein a second occurrence number of the predetermined number of target second county-level location entity is greater than that of other one of the at least one second county-level location entity;
determining, for each second prefecture-level location entity, a third occurrence number of the second prefecture-level location entity in the plurality of first target standardized addresses;
determining, from the at least one second prefecture-level location entity, a predetermined number of target second prefecture-level location entity, wherein a third occurrence number of the predetermined number of target second prefecture-level location entity is greater than that of other one of the at least one second prefecture-level location entity;
determining, in response to the at least one first county-level location entity comprising a target first county-level location entity same as the target second county-level location entity, a first target prefecture-level location entity corresponding to the target first county-level location entity; and
determining a standardized address corresponding to the target first county-level location entity and corresponding to the first target prefecture-level location entity as the third target standardized address, in response to the target second prefecture-level location entity comprising the first target prefecture-level location entity; or
wherein the plurality of first target standardized addresses comprise at least one third prefecture-level location entity,
the acquiring, from the same standardized address, a standardized address corresponding to a first prefecture-level location entity that meets a second predetermined condition, and determining the standardized address corresponding to the first prefecture-level location entity that meets the second predetermined condition as the third target standardized address comprises:
determining, for each third prefecture-level location entity, a fourth occurrence number of the third prefecture-level location entity in the plurality of first target standardized addresses;
determining, from the at least one third prefecture-level location entity, a predetermined number of target third prefecture-level location entity, wherein a fourth occurrence number of the predetermined number of target third prefecture-level location entity is greater than that of other one of the at least one third prefecture-level location entity; and
determining, in response to the at least one first prefecture-level location entity comprising a target first prefecture-level location entity same as the target third prefecture-level location entity, a standardized address corresponding to the target first prefecture-level location entity as the third target standardized address; or
wherein the plurality of first target standardized addresses comprise at least one second provincial-level location entity,
the acquiring, from the same standardized address, a standardized address corresponding to a first provincial-level location entity that meets a third predetermined condition, and determining the standardized address corresponding to the first provincial-level location entity that meets the third predetermined condition as the third target standardized address comprises:
determining, for each second provincial-level location entity, a fifth occurrence number of the second provincial-level location entity in the plurality of first target standardized addresses;
determining, from the at least one second provincial-level location entity, a predetermined number of target second provincial-level location entity, wherein a fifth occurrence number of the predetermined number of target second provincial-level location entity is greater than that of other one of the at least one second provincial-level location entity; and
determining, in response to the at least one first provincial-level location entity comprising a target first provincial-level location entity same as the target second provincial-level location entity, a standardized address corresponding to the target first provincial-level location entity with a maximum fifth occurrence number as the third target standardized address.

11. The method according to any one of claims 7 to 10, further comprising:
determining, according to the plurality of first target standardized addresses, the third target standardized address for representing the place where the event occurs, in response to a determination that no second target standardized address corresponds to the preset field information or the plurality of first target standardized addresses does not comprise a same standardized address as the second target standardized address,
wherein the determining, according to the plurality of first target standardized addresses, the third target standardized address for representing the place where the event occurs comprises:
in response to the plurality of first target standardized addresses comprising at least one third county-level location entity,
acquiring, from the plurality of first target standardized addresses, a standardized address corresponding to a third county-level location entity that meets a fourth predetermined condition, and determining the standardized address corresponding to the third county-level location entity that meets the fourth predetermined condition as the third target standardized address;
in response to the plurality of first target standardized addresses comprising at least one fourth prefecture-level location entity and comprising no third county-level location entity,
acquiring, from the plurality of first target standardized addresses, a standardized address corresponding to a fourth prefecture-level location entity that meets a fifth predetermined condition, and determining the standardized address corresponding to the fourth prefecture-level location entity that meets the fifth predetermined condition as the third target standardized address; and
in response to the plurality of first target standardized addresses comprising the third provincial-level location entity and comprising no third county-level location entity and no fourth prefecture-level location entity,
acquiring, from the plurality of first target standardized addresses, a standardized address corresponding to a third provincial-level location entity that meets a sixth predetermined condition, and determining the standardized address corresponding to the third provincial-level location entity that meets the sixth predetermined condition as the third target standardized address,
wherein the plurality of first target standardized addresses further comprise at least one fifth prefecture-level location entity,
the acquiring, from the plurality of first target standardized addresses, a standardized address corresponding to a third county-level location entity that meets a fourth predetermined condition, and determining the standardized address corresponding to the third county-level location entity that meets the fourth predetermined condition as the third target standardized address comprises:
determining, for each third county-level location entity, a sixth occurrence number of the third county-level location entity in the plurality of first target standardized addresses;
in response to the sixth occurrence number being less than a second predetermined threshold,
acquiring, from the plurality of first target standardized addresses, a standardized address corresponding to the fourth prefecture-level location entity that meets the fifth predetermined condition, and determining the standardized address corresponding to the fourth prefecture-level location entity that meets the fifth predetermined condition as the third target standardized address;
determining a second target prefecture-level location entity corresponding to a target third county-level location entity whose sixth occurrence number is greater than or equal to the second predetermined threshold, in response to the sixth occurrence number being greater than or equal to the second predetermined threshold;
determining, for each fifth prefecture-level location entity, a seventh occurrence number of the fifth prefecture-level location entity in the plurality of first target standardized addresses;
determining, from the at least one fifth prefecture-level location entity, a predetermined number of target fifth prefecture-level location entity, wherein the seventh occurrence number of the predetermined number of target fifth prefecture-level location entity is greater than that of other one of the at least one fifth prefecture-level location entity; and
determining a standardized address corresponding to the target third county-level location entity and corresponding to the second target prefecture-level location entity as the third target standardized address, in response to the target fifth prefecture-level location entity comprising the second target prefecture-level location entity, and/or
wherein the acquiring, from the plurality of first target standardized addresses, a standardized address corresponding to a fourth prefecture-level location entity that meets a fifth predetermined condition, and determining the standardized address corresponding to the fourth prefecture-level location entity that meets the fifth predetermined condition as the third target standardized address comprises:
determining, for each fourth prefecture-level location entity, an eighth occurrence number of the fourth prefecture-level location entity in the plurality of first target standardized addresses;
in response to the eighth occurrence number being less than a third predetermined threshold,
acquiring, from the plurality of first target standardized addresses, a standardized address corresponding to the third provincial-level location entity that meets the sixth predetermined condition, and determining the standardized address corresponding to the third provincial-level location entity that meets the sixth predetermined condition as the third target standardized address; and
determining a standardized address corresponding to a target fourth prefecture-level location entity with a maximum eighth occurrence number as the third target standardized address, in response to the eighth occurrence number being greater than or equal to the third predetermined threshold, and/or
wherein the acquiring, from the plurality of first target standardized addresses, a standardized address corresponding to a third provincial-level location entity that meets a sixth predetermined condition and determining the standardized address corresponding to the third provincial-level location entity that meets the sixth predetermined condition as the third target standardized address comprises:
determining, for each third provincial-level location entity, a ninth occurrence number of the third provincial-level location entity in the plurality of first target standardized addresses; and
determining a standardized address corresponding to a target third provincial-level location entity with a maximum ninth occurrence number as the third target standardized address.

12. An apparatus (500) of recognizing an address, comprising:
a recognition module (510) configured to perform a location entity recognition on a content to be recognized for describing an event, so as to obtain a target location entity, wherein the target location entity comprises at least one selected from: a standardized location entity, an alias location entity, or a landmark location entity;
a first determination module (520) configured to determine, for each type of location entity in the target location entity, a standardized address corresponding to the location entity according to an address graph, so as to obtain at least one standardized address, wherein the address graph comprises a standardized location entity, an alias location entity, a landmark location entity, and a corresponding relationship between location entities; and
a second determination module (530) configured to determine, from the at least one standardized address, a first target standardized address corresponding to the content to be recognized, wherein the first target standardized address is configured to represent a place where the event occurs.

13. An electronic device (600), comprising:
at least one processor; and
a memory communicatively connected to the at least one processor, wherein the memory stores instructions executable by the at least one processor, and the instructions, when executed by the at least one processor, cause the at least one processor to implement the method of any one of claims 1 to 11.

14. A non-transitory computer-readable storage medium having computer instructions therein, wherein the computer instructions are configured to cause a computer system to implement the method of any one of claims 1 to 11.

15. A computer program product containing a computer program, wherein the computer program, when executed by a processor, causes the processor to implement the method of any one of claims 1 to 11.
